# EUROPEAN PATENT APPLICATION

(11) **EP 3 378 710 A1**
(43) Date of publication of application: **26.09.2018**
(21) Application number: 17156250.7
(22) Date of filing: 23.03.2017
(51) Int. Cl.: B60R 22/46

(54) **CLUTCH FOR A SEAT BELT TENSIONER**

(71) Applicant: TRW Automotive GmbH, 73553 Alfdorf (DE)
(72) Inventor: Holbein, Wolfgang, 73553 Alfdorf (DE); Singh, Yashwanth, 73553 Alfdorf (DE)
(74) Representative: ZF TRW Patentabteilung

(57) **Abstract**

A clutch (10) for a seat-belt tensioner in a vehicle has a driving element (14) adapted for being rotated in a driving direction (D) and in a releasing direction (R) and a driven element (18) connectable with a seat-belt spool, the driving element (14) and the driven element (18) having a common rotation axis (A). Further, a pawl (22) is provided that is being pivotally held at a pivot pin arranged on the driving element and forming a pivot axis (24), the pawl (22) being adapted to assume a disengaged position in which the pawl (22) is not in engagement with the driven element and from which it can be pivoted radially inwards by turning the driving element (14) in driving direction (D), an engaged position in which the pawl (22) engages the driven element (18) and couples the driving element (14) with the driven element (18), and a decoupled position in which the pawl (22) is not in engagement with the driven element (18) and cannot be engaged with the driven element (18) by turning the driving element (14) in driving direction (D). The clutch (10) further has a clutch disk ring (32) having an outer essentially circular circumference and a first clutch disk arm (36) extending inwards into an opening (34) enclosed by the clutch disk ring (32), the first clutch disk arm (36) interacting with the pawl (22) to guide the pawl (22) into and out of the engaged position, and the clutch disk ring (32) having a second clutch disk arm (46) extending inwards into the opening (34) enclosed by the clutch disk ring (32), the second clutch disk arm (46) being flexible in radial direction (r) and being spaced from the first clutch disk arm (36) so that the pawl (22) comes into contact with both clutch disk arms (36, 46) when moving into the decoupled position.

## Description

The invention relates to a clutch for a seatbelt tensioner of a seatbelt system in a vehicle.

Reversible seatbelt tensioners are used to increase the safety of the vehicle occupants and their driving comfort. A reversible drive, usually an electric motor, is coupled with a seatbelt spool axis to rotate the seatbelt spool of a seatbelt retractor and to take in loose seatbelt webbing, for instance in situations in which a control unit decides that this could be potentially beneficial. Then, a clutch is closed that couples the reversible drive with the seatbelt spool, and the seatbelt spool is rotated by the reversible drive to draw in seatbelt webbing. In the regular operating mode of the seatbelt system the clutch is open so that the seatbelt spool of the seatbelt retractor can draw in and give out the seatbelt webbing without being hindered by the reversible drive. An example for a clutch for a seatbelt tensioner is shown in DE 10 2011 119 343 A1.

Additionally to the reversible drive, the seatbelt tensioner usually is provided with a single-use pyrotechnic drive that will only be activated in case of an actual crash situation. The seatbelt spool is rotated by the pyrotechnic drive with a far higher rotational velocity than by the reversible drive. So as not to interfere with the pyrotechnic drive and also to prevent an interference with a subsequent load limiting function of the seatbelt system that reduces the force acting on the occupant after the pyrotechnic drive has finished its operation, the clutch should be decoupled from the seatbelt spool when the pyrotechnic drive is activated. The decoupling from the seatbelt spool should occur in a determined and controlled manner and should transfer the clutch reliably into a decoupled position in which no unintentional reengagement can occur.

The seatbelt spool, the clutch and also the reversible drive and the pyrotechnic drive usually are mounted on a frame of the seatbelt retractor.

It is an object of the present invention to provide a clutch that will be reliably decoupled on activation of the pyrotechnic drive.

This object is achieved by a clutch for a seat-belt tensioner in a vehicle, comprising the features of claim 1. The clutch for comprises a driving element adapted for being rotated in driving direction and in a releasing direction. A driven element is provided that is connectable with a seat-belt spool. The driving element and the driven element have a common rotation axis. Further, a pawl is provided being pivotally held at a pivot pin arranged on the driving element and forming a pivot axis. The pawl is adapted to assume a disengaged position in which the pawl is not in engagement with the driven element and from which it can be pivoted radially inwards by turning the driving element in driving direction, an engaged position in which the pawl engages the driven element and couples the driving element with the driven element, and a decoupled position in which the pawl is not in engagement with the driven element and cannot be engaged with the driven element by turning the driving element in driving direction. The clutch further comprises a clutch disk ring having an outer essentially circular circumference and a first clutch disk arm extending inwards into an opening enclosed by the clutch disk ring, the first clutch disk arm interacting with the pawl to guide the pawl at least into and out of the engaged position. Also, the clutch disk ring has a second clutch disk arm extending inwards into the opening enclosed by the clutch disk ring, the second clutch disk arm being flexible in radial direction and being spaced from the first clutch disk arm in circumferential direction in a way that the pawl comes into contact with both clutch disk arms when moving into the decoupled position.

When the pawl is in its neutral or disengaged position, the clutch is in its open, disengaged state. The driving element is not coupled with the driven element. Is the pawl in its engaged position, engaged with the driven element, the clutch is in its closed, engaged state. In the following, the terms "disengaged position" and "engaged position" will not only be used to describe pawl positions, but also to denote the open and closed state of the clutch, respectively.

The driving element usually is connected to a reversible drive, normally an electric motor that can rotate the driving element in driving direction and in the reversed releasing direction.

The driven element is usually fixedly coupled to a pyrotechnic drive so that the driven element is set into rotation when the pyrotechnic drive is activated.

Generally, the pawl is transferred from the engaged position to the decoupled position by accelerating the pawl radially outwards. This acceleration can be generated either by a fast rotation of the driven element due to the operation of the pyrotechnic drive or by an unintentional loss of contact of the pawl with the driven element when the reversible drive is running in driving direction. The kinetic energy of the pawl preferably is in both cases high enough to transfer the pawl into the decoupled position.

In case of the pyrotechnic drive of the seat belt tensioner being activated, the seat belt spool should be rotated exclusively by the pyrotechnic drive, and the reversible drive should reliably stay decoupled.

Therefore, when the pawl is in its decoupled position, a normal reengagement of the clutch is prevented. This implies that a rotation of the driving element in driving direction will not lead to the pawl being pivoted radially inwards and will not bring the pawl into the engaged position. The only operating position from which the pawl can be pivoted inwards and the clutch can be closed is the disengaged position.

However, in case of an unintentional decoupling when only the reversible drive is operated, is should be possible to reengage the clutch. To allow a controlled reengagement process, the clutch is designed such that the pawl can be transferred from the decoupled position back into the neutral position, where the clutch is still open, but can be closed again. To this effect, in particular the driving element is rotated in releasing direction.

To reengage the pawl from the neutral position, the driving element then is rotated as usual in driving direction, moving the pawl into its engaged position in engagement with the driven element.

With the configuration according to the invention, it is possible to counter a relative rotation between the clutch disk ring and the driving element. Such a rotation will be generated when the pawl contacts the first clutch disk arm on its motion radially outwards into the decoupled position, thereby transmitting a force to the clutch disk ring acting in the driving direction. However, on contact with the second clutch disk arm, the pawl introduces a second force into the clutch disk ring acting in the opposite circumferential direction, i.e. the releasing direction. By this interaction, rotation of the clutch disk ring is reduced or stopped completely. Therefore, it is ensured that the pawl always reaches its intended position relative to the clutch disk arms in the decoupled position.

Preferably, the clutch is configured such that, when moving from the engaged position into the decoupled position, the pawl generates a force acting on the second clutch disk arm that is essentially directed opposite with regard to the circumferential direction to a force generated by the pawl acting on the first clutch disk arm. In particular, the absolute value of the tangential components of the first and the second force should be essentially equal.

In the decoupled position the pawl may be in contact with both the first and the second clutch disk arm. Specifically, the pawl can be held between the two clutch disk arms so that it is kept securely in the decoupled position by the clutch disk arms.

More specifically, the pawl can be arrested by a latching connection between the first clutch disk arm and the pawl in the decoupled position. The latching connection advantageously is arranged near the middle of the extension of the pawl in circumferential direction. In this region, it is easily possible to design guiding geometries for interaction between the first clutch disk arm and the pawl for guiding the pawl between its different positions and also for forming the latching connection. The guiding geometries on the pawl are preferably realized on two side faces limiting a recess in the surface of pawl in radial direction.

The first clutch disk arm usually extends approximately radially inwards into the opening enclosed by the clutch disk ring and lies essentially in the same plane as the clutch disk ring.

In one preferred example, the first clutch disk arm is hook-shaped, having a flexible section extending essentially radially outwards and ending in a free end. Preferably, the latching connection is closed by the free end of the first clutch disk arm snapping below a tangential protrusion on the side face of the recess in the pawl pointing in driving direction.

In a preferred embodiment, in the decoupled position a radial inner face of the tangential protrusion is inclined with regard to the tangential direction so that a free end of the radial inner face is positioned further radially outwards than an inner end of the radial inner face continuing into the non-recessed bulk of the pawl. By this configuration the free end of the flexible section of the first clutch disk arm is guided towards the side face of the recess and is securely held radially below the tangential protrusion in the case that the pawl should rebounce after reaching its decoupled position.

The radial inner face is inclined by an angle lying e.g. between about 0,5° and 15°, in particular between 3° and 10°.

While the latching connection is closed, the free end of the pawl preferably presses against the second clutch disk arm and may deform the second clutch disk arm radially outwards.

The kinetic energy transferred to the pawl on activation of the pyrotechnic drive or in an unintentional loss of contact between the driven element and the pawl is preferably high enough to move the pawl further radially outwards than in its neutral position and to deform the first clutch disk arm far enough to close the latching connection.

In contrast thereto, during normal disengagement, the kinetic energy of the pawl is not high enough to close the latching connection.

The second clutch disk arm preferably extends obliquely from the clutch disk ring into the opening enclosed by the clutch disk ring and is inclined away from the pivot axis of the pawl.

The second clutch disk arm may be configured so that it is deformable radially outwards.

In one advantageous design, the second clutch disk arm consists of a flexible and in particular essentially straight web, one end of which may be fixed to an inner circumference of the clutch disk ring, while the other, free end extends into the opening enclosed by the clutch disk ring. The flexibility of the second clutch disk arm is preferably chosen such that the web can bend and the free end is pushed radially outwards by the free end of the pawl. An increasing deformation preferably leads to an increasing pretension of the second clutch disk arm. Therefore, the second clutch disk arm may exert a radially inwardly directed force on the free end of the pawl in its deformed and/or deflected state.

In particular, the free end of the pawl has a pointed tip that acts as a contact point between the pawl and the second clutch disk arm to provide a defined momentum transfer on impact of the pawl and that assists to generate a high clamping pressure in the decoupled position.

In a second function, the second clutch disk arm may serve to prevent an unintended relative rotation of the clutch disk ring against the driving element in case that the vehicle occupant moves before the pyrotechnic drive of the seat-belt tensioner is activated. When the occupant moves, they lean against the seat-belt so that the seat-belt spool is rotated in releasing direction to pay out seat-belt webbing. As the driven element is coupled with the seatbelt spool, the driven element also turns in releasing direction, putting the pawl along. Due to their coupling with the pawl, the driving element and the clutch disk ring are also entrained in releasing direction over a small angular range. Usually the clutch is configured so that the clutch disk ring and the driving element are connected by a return spring that ensures that the clutch disk ring has a fixed relative angular position with regard to the driving element in the neutral position of the pawl. In the neutral position, the return spring is relaxed.

However, as in this specific situation that pawl still engages the driven element and the driven element is fixed in position by the occupant's weight, the return spring keeps its pretension. If now the pyrotechnic drive activated, the clutch disk ring might change its position relative to the pawl as soon as the pawl looses contact with the driven element due to the force exerted by the return spring.

The second clutch disk arm should be configured long enough to allow contact with the pawl over a certain angular range, so that the free and of the pawl can come into contact with the second clutch disk arm during decoupling in a relaxed state of the return spring as well as in a pretensioned state of the same.Preferably, the clutch is configured so that in the decoupled position, in a situation where the return spring pretensions the clutch disk ring for a rotation in driving direction, the second clutch disk arm is in contact with the pawl and prevents a relative motion between the clutch disk ring and the driving element. In particular, the free end of the pawl that comes into contact with the second clutch disk arm when the pawl reaches its decoupled position and prevents a rotation of the clutch disk ring in driving direction relative to the pawl, therefore keeping the latching connection closed.

The second clutch disk arm may also support the release motion of the pawl from the decoupled position back into the disengaged position. To achieve this object, the second clutch disk arm may be arranged so that, in the decoupled position, it exerts a force on the free end of the pawl that is directed radially inwards when the reverse of the drive rotates the driving element in releasing direction. The second clutch disk arm helps pushing the pawl out of the decoupled position e.g. after an unintended decoupling. In particular, due to the radially inwardly directed force that acts on the free end of the pawl, the free end of the pawl can slide along a radially inner side of the second clutch arm that extends obliquely into the opening enclosed by the clutch disk ring. As the second clutch disk arm is bent radially outwards by the force exerted by the pawl during its motion into the decoupled position, the second clutch disk arm is pretensioned radially inwards when the pawl is in its decoupled position and exerts a radially inwardly directed force of the free end of the pawl.

In still another function, second clutch disk arm may serve as a pawl end stop in the disengaged position, the free end of the pawl resting against the second clutch disk arm and exerting a radially outwardly directed force on the second clutch disk arm. Preferably, the second clutch disk arm is slightly deformed radially outwards in the disengaged position of the pawl, but less that the decoupled position. The resulting slight pretension of the second clutch disk arm helps to avoid a rattling noise, as the pawl is held securely between the first and the second clutch disk arms.

The pawl end stop preferably prevents the pawl from being pushed further radially outwards than the disengaged position during normal disengagement.

In a preferred embodiment, a retainer ring is provided surrounding the outer circumference of the clutch disk ring and being coupled by friction with the clutch disk ring, the retainer ring being configured for limited rotation relative to a retaining structure arranged on a clutch housing. In specific situations, in particular during engagement and disengagement of the clutch, the retainer ring provides a limited angular rotation between the driving element and the clutch disk ring which is held back due to the friction coupling with the retainer ring. This limited angular relative rotation of the driving element and the clutch disk ring also determines the maximum amount of pretensioning of the return spring.

In a preferred further embodiment, a spring element is provided that is fixedly arranged at the driving element and that has a flexible portion that is elastically deflectable radially outwards, the flexible portion of the spring element lying in the vicinity of the free end of the pawl when the pawl is in its decoupled position. The flexible portion preferentially lies in a plane defined by the clutch disk element.

The spring element can fulfill several functions. In particular, the flexible portion may comprise a pawl end stop against which the pawl rests in the neutral position and that prevents a free end of the pawl from moving further radially outwards in the disengaged position. In this case, the second clutch disk arm need not contact the free end of the pawl in the disengaged position.

Further, the spring element may be part of a mechanism that keeps the pawl in the decoupled position and/or supports the motion of the pawl back into the disengaged position, and e.g. assisting the second clutch disk arm in this function in that it provides a higher pretensioning force.

Generally, the term "radially outwards" in this application is not only used in the true mathematical sense, but also to indicate a general motion of a component away from the rotation axis of the clutch.

Preferred embodiments of the invention are described in detail in the following with reference to the attached drawings, in which:
- Figure 1 shows a schematic plan view of a clutch for a seat belt tensioner according to a first embodiment of the invention, in a disengaged position;
- Figure 2 shows the clutch of Figure 1 during the transition from the disengaged into an engaged position;
- Figure 3 shows the clutch of Figure 1 in the engaged position, where a driving element of the clutch transfers force to a driven element;
- Figure 4 shows the clutch of Figure 1 in the engaged position, shortly before the pawl is moved into the decoupled position;
- Figure 5 shows the clutch of Figure 1 shortly before the pawl reaches the decoupled position;
- Figure 6 and 6a show the clutch of Figure 1 in the decoupled position;
- Figure 7 shows the clutch of Figure 1 in the engaged position, in a situation where a vehicle occupant pulls seat belt off of a seat belt spool;
- Figure 8 shows the clutch of Figure 1 in the decoupled position, shortly before the pawl is moved back into the disengaged position;
- Figure 9 shows a schematic plan view of a clutch for a seat belt tensioner according to a second embodiment of the invention, in a disengaged position,
- Figure 10 shows a schematic plan view of a further embodiment of a clutch according to the invention in the decoupled position; and
- Figure 11 shows an enlarged section of Figure 10.

The figures show a clutch 10, 10' for a seatbelt tensioner in a vehicle. Only the clutch is displayed in the figures. However, as is generally known in the art, the seatbelt tensioner is connected to a seatbelt retractor having a frame in which a seatbelt spool is rotatably arranged that can take up and give out seatbelt webbing. Usually, the clutch is arranged at one side of the seatbelt spool, while a pyrotechnic drive of the seatbelt tensioner, comprising a mass accelerated by a pyrotechnic charge on activation that interacts with a drive pinion connected to the seatbelt spool, is positioned at the opposite side of the seatbelt spool. The accelerated mass is for instance a so-called snake which is a cylindrical body of a deformable plastic material that is brought into contact with the drive pinion to set the seatbelt spool into a fast rotation.

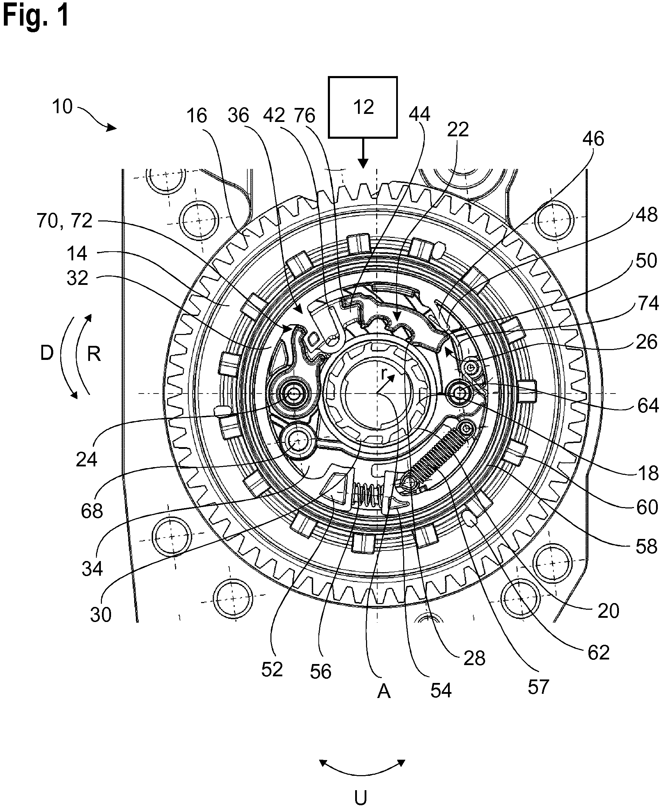

The clutch is connected to a reversible drive 12 (only schematic in Figure 1) of the seatbelt tensioner, usually an electric motor, to turn the seatbelt spool in a driving direction D to take up seatbelt webbing under certain conditions. The reversible drive 12 can be operated repeatedly while the pyrotechnic drive is a single-use device.

The clutch 10 has a disk-shaped driving element 14 that can be connected with the reversible drive 12 by a driving gear 16 that is part of the driving element 14.

Further, the clutch 10 has a driven element 18 arranged coaxially with the driving element 14 and connected with regard to rotation to the seatbelt spool. The seatbelt spool and the driven element 18 always rotate in the same direction and with the same velocity.

The driving element 14 and the driven element 18 have a common rotation axis A, the driven element 18 extending through a center opening 20 of the driving element 14. Generally, when a radial direction r and a circumferential direction U are discussed in this application, these directions always relate to the common rotation axis A.

The reversible drive 12 can rotate the driving element 14 in the driving direction D and in the opposite releasing direction R to transfer the clutch 10 into different operating positions. The driving direction D is indicated counterclockwise in the figures while the releasing direction R is indicated clockwise in the figures.

The clutch 10 serves to couple the reversible drive 12 to the seatbelt spool so that the driving element 14 can turn the seatbelt spool in the driving direction D to wind up seatbelt webbing to tighten the seatbelt around a vehicle occupant. This kind of seatbelt tensioning, also called pretensioning, takes place for instance when an electronic control unit detects an imminent dangerous situation in which the seatbelt should be tensioned as a measure of precaution. If the critical situation passes, the clutch 10 will be disengaged again so that the seatbelt spool again can turn unhindered in both directions.

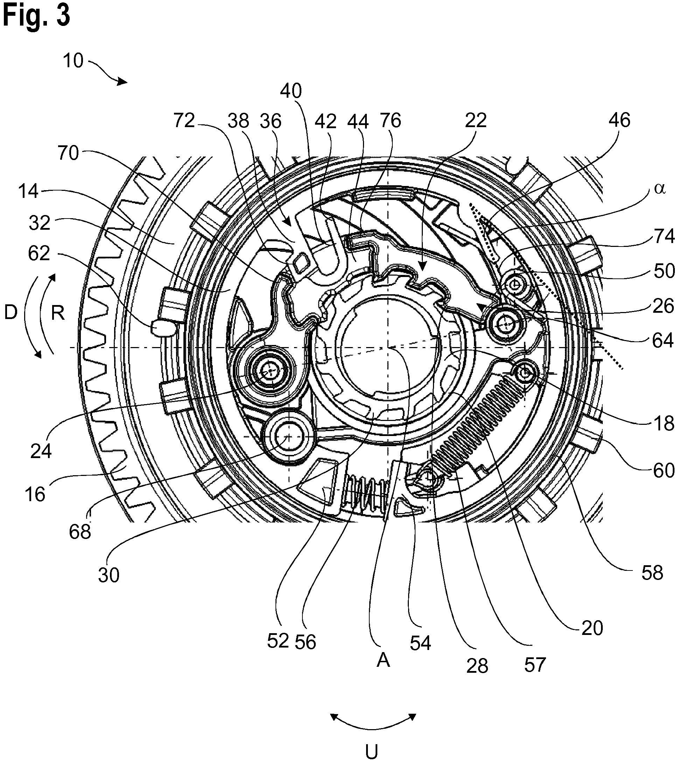

When the clutch 10 is closed, the reversible drive 12 is connected to the seat-belt spool (Fig. 3). When the clutch 10 is opened, the reversible drive 12 is decoupled from the seatbelt spool (Fig. 1).

The pyrotechnic drive is arranged on the opposite side of the seatbelt spool from the clutch 10 (not shown). It is only activated in case of an actual crash and will rotate the seatbelt spool in driving direction D to take up seatbelt webbing. This rotation caused by the pyrotechnic drive is much faster than the rotation caused by the reversible drive 12.

The rotational motion of the driving element 14 is transmitted to the driven element 18 by a pawl 22 that is pivotally held on the driving element 14 at a pivot pin that may be formed integrally with the driving element 14. The pivot pin defines a pivot axis 24 for the pawl 22. The pivot axis extends in parallel with the rotation axis A (and thus perpendicular to the plane defined by the driving element 14).

The pawl 22 has a generally curved shape that approximately follows the curvature of the driven element 18. The pawl 22 lies in a plane parallel to that of the driving element 14 and pivots essentially radially inwards towards the rotation axis A. In the region of its free end 26, the pawl 22 has several teeth 28 (in this example three teeth 28) that can come into engagement with teeth 30 of a toothing along the outer circumference of the driven element 18.

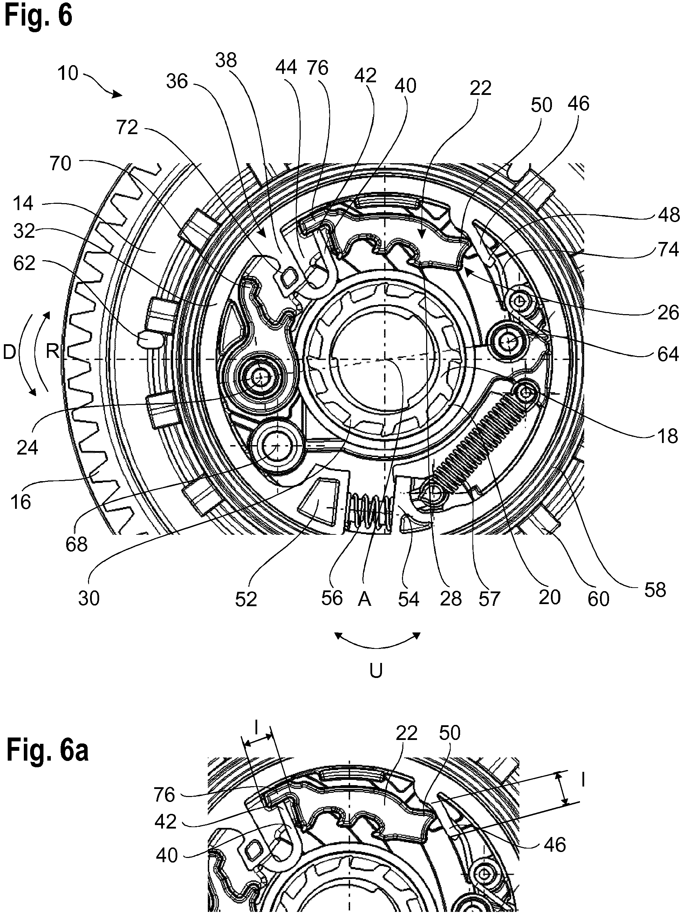

The pawl 22 can be pivoted around the pivot pin into several positions: a disengaged (or neutral) position in which the pawl 22 is not in engagement with the driven element 18 (Fig. 1), an engaged position (Fig. 3), where the pawl 22 is in engagement with the driven element 18, and a decoupled position (Fig. 6), where the pawl 22 is located radially further outwards than in the disengaged position and is locked against a regular (re)-engagement.

Engagement and disengagement of the pawl 22 by rotation of the reversible drive 12 in driving direction D and releasing direction R are denoted in this application as the regular operations of the clutch. The pawl 22 will reach the decoupled position only when the pyrotechnic drive is activated or due to an unintentional decoupling, as will be described later.

The pawl 22 is moved from the disengaged position into the engaged position by interaction with a clutch disk ring 32. The clutch disk ring 32 encloses an opening 34, is centered around the common rotation axis A and is arranged in a plane above the driving element 14 so that it surrounds the pawl 22.

The clutch disk ring 32 comprises a first clutch disk arm 36 extending radially inwards from an inner circumference of the clutch disk ring 32.

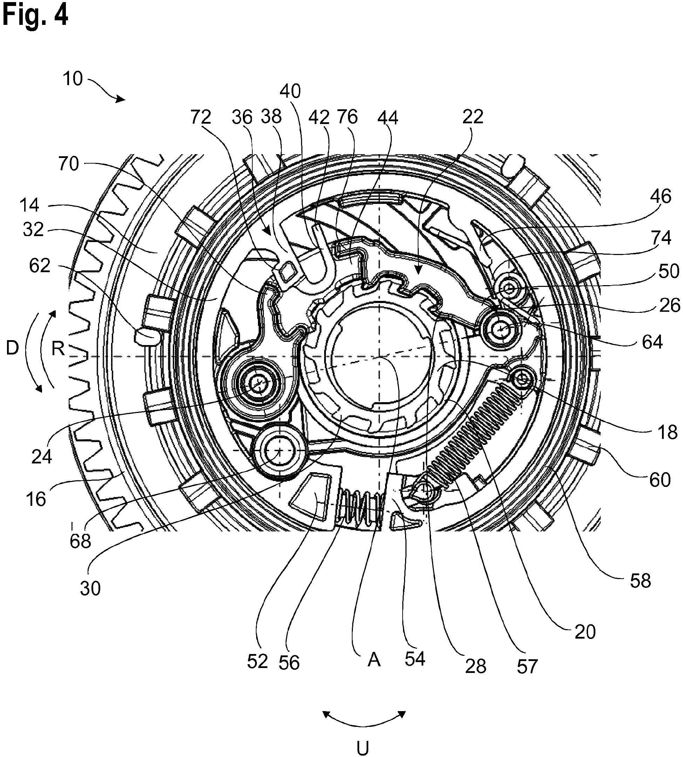

The first clutch disk arm 36 shown here is hook shaped. The hook is formed by a rigid section 38 connected with the clutch disk ring 32 and extending inwards into the opening 34 enclosed by the clutch disk ring 32 and a flexible, free section 40 connected to the end of the rigid section 38 and extending outwards towards the clutch disk ring 32 (see e.g. Fig. 4). The hook sections 38, 40 are connected by a U-shaped connecting portion. In an unstressed state the hook sections 38, 40 are essentially parallel to each other. The flexible section 40 ends in a free end 42 positioned on the far side of the first clutch disk arm 36 from the pivot axis 24.

The first clutch disk arm 36 is arranged in an axial recess 44 in the body of the pawl 22 that is delimited by a left-hand side face and a right-hand side face, both side faces pointing essentially in circumferential direction U. In the recess 44 the thickness of the pawl 22 is reduced in axial direction A with regard to the rest of the pawl 22.

On the left and right-hand side faces of the first clutch disk arm 36 and of the recess 44, interacting guiding geometries are provided that serve to guide the pawl 22 radially inwards into engagement with the driven element 18 during the engagement process and radially outwards again out of engagement with the driven element 18 back into the disengaged position when the driving element 14 is rotated in releasing direction R.

Further, the clutch disk ring 32 comprises a second clutch disk arm 46 that extends from the inner circumferential surface of the clutch disk ring 32 obliquely into the opening 34 enclosed by the clutch disk ring 32. The second clutch disk arm 46 is flexible in radial direction so that its angle α with a tangent to the inner surface of the clutch disk ring 32 can be changed by a radially outwardly directed force acting on the second clutch disk arm 46.

In the embodiments shown here, the second clutch disk arm 46 consists essentially of a single flexible web, one end of which is fixed to the inner circumference of the clutch disk ring 32, while the other, free end 48 extends into the opening 34 enclosed by the clutch disk ring 32.

The second clutch disk arm 46 is arranged at a distance from the first clutch disk arm 36 along the circumferential direction U. The distance is chosen so that the free end 26 of the pawl 22, more particularly a radially outwardly arranged nose 50 at the free end 26, is in contact with the second clutch disk arm 46 when the pawl 22 is in its decoupled position.

The clutch disk ring 32 is discontinuous in circumferential direction U. The gap between its two circumferential ends 52, 54 is bridged by an expansion spring 56 that presses the circumferential ends 52, 54 apart in circumferential direction U.

Also, the clutch disk ring 32 is coupled by a return spring 57 with the driving element 14 that allows only a certain relative angular displacement between the driving element 14 and the clutch disk ring 32. The return spring 57 extends parallel to the surface of the driving element 14.

The clutch disk ring 32 is surrounded by a retainer ring 58 to which the clutch disk ring 32 is coupled by friction at its inner circumference with the outer circumference of the clutch disk ring 32. The friction is at least partly provided by the expansion spring 56 pressing the circumferential ends 52, 54 of the clutch disk ring 32 apart. The clutch disk ring 32 and the retainer ring 58 are coupled by friction only. The retainer ring 58 has a plurality of radially extending spokes 60 that are arranged at regular distances along the outer periphery of the retainer ring 58. A retaining structure 62, here in form of several retaining pins distributed along the circumference of the retainer ring 58, limits the rotation of the retainer ring 58 to the distance between two adjacent spokes 60, for instance between 10° and 30°.

Instead of the retaining structure 62 described above, any different kind of retaining structure could be provided that allows a limited rotation of the retainer ring 58 in both directions D, R.

The driving element 14 can rotate relative to the clutch disk ring 32 when the clutch disk ring 32 is retained by friction on the retainer ring 58. At a certain threshold of the rotational force, however, the frictional forces will be overcome, and the clutch disk ring 32 will rotate together with the driving element 14.

To transfer the clutch 10 into its closed state (i.e. its engaged position), the pawl 22 has to be brought into engagement with the driven element 18.

For this purpose, the reversible drive 12 is activated and the driving element 14 starts to rotate in driving direction D. In the disengaged position of the pawl 22, the spokes 60 of the retainer ring 58 are distanced in driving direction D from the nearest stopping pin.

As the clutch disk ring 32 is coupled by the return spring 57 with the driving element 14, initially the clutch disk ring 32 is entrained by the rotating driving element 14. Due to the frictional force between the clutch disk ring 32 and the retainer ring 58, the retainer ring 58 is also entrained by the clutch disk ring 32 until the spokes 60 come into contact with the stopping pins of the retaining structure 62. Then, the retainer ring 58 stops rotating and, due to the frictional force between the retainer ring 58 and the clutch disk ring 32, the clutch disk ring 32 is also stopped from rotating.

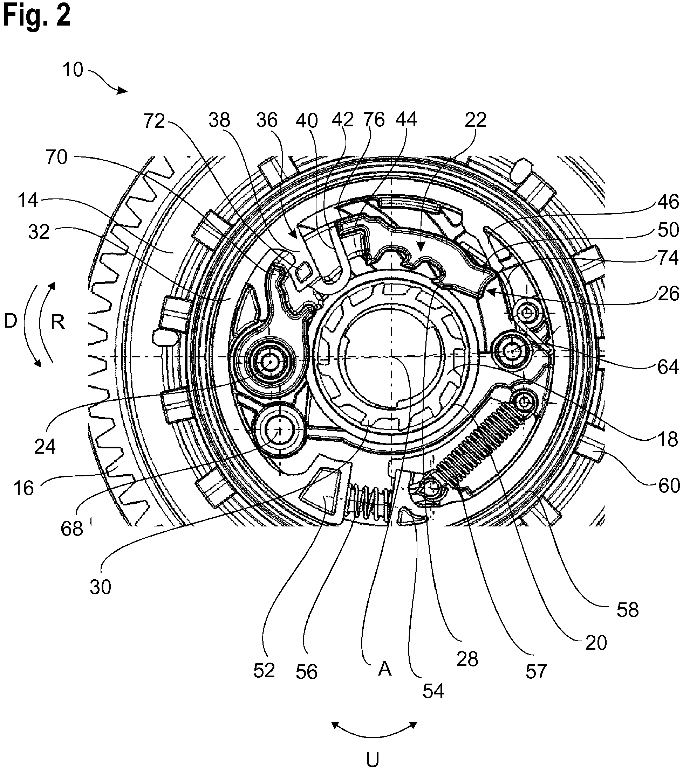

This results in the driving element 14 rotating relative to the first clutch disk arm 36, and the right-hand face of the recess 44 in the pawl 22 is pushed against the right-hand side (in the figures) of the flexible section 40 of the first clutch disk arm 36. Thereby, the pawl 22 is pivoted radially inwards into engagement with the driven element 18. The teeth 28 of the pawl 22 mesh with the teeth 30 of the driven element 18 so that the driven element 18 is entrained in driving direction D by the pawl 22. This situation is shown in Figures 1 to 3.

The inward movement of the pawl 22 continues until the free pawl end 26 comes into contact with a pawl stop 64 fixedly arranged on the driving element 14. The pawl stop 64 now also transfers load to the pawl 22 and, therefore, to the driven element 18. The center of the pawl stop 64 lies here on straight line with the rotation axis A and the pawl pivot axis 24.

The relative motion between the driving element 14 and the clutch disk ring 32 continues until a clutch disk stop 68 on the driving element 14 comes into contact with the first circumferential end 52 of the clutch disk ring 32, which is formed here as a projection extending inwards towards the rotation axis A. From this moment on, the driving element 14 pushes the clutch disk ring 32 in driving direction D, and the clutch disk ring 32 rotates together with the driving element 14 and slides inside the retainer ring 58.

When the pyrotechnic drive is not activated, the clutch 10 will be disengaged again and transferred back into the neutral position by rotating the reversible drive 12 in the releasing direction R.

To disengage the clutch 10, the pawl 22 rotates together with the driving element 14 relative to the clutch disk ring 32 which is again held by friction on the retainer ring 58. The left-hand face of the recess 44 (in the figures) comes into contact with the left-hand side of the rigid section 40 of the first clutch disk arm 36.

The contact between the pawl 22 and the first clutch disk arm 36 occurs between a protrusion 70 on the left-hand face of the recess 44 and a protrusion 72 of the left-hand side of the rigid section 40 of the first clutch disk arm 36. Each of the protrusions 70, 72 has a face that is inclined against the circumferential direction U, so that a force component radial outwards ensues.

Entrained by the clutch disk ring 32, the retainer ring 58 rotates until its spokes 60 come into contact with the retaining structure 62. The frictional force between the retainer ring 58 and the clutch disk ring 32 arrests the clutch disk ring 32 and, therefore, also the first clutch disk arm 36 with regard to the rotating driving element 14. The protrusion 70 on the pawl 22 starts sliding radially outwards along the protrusion 72 on the rigid section 40 of the first clutch disk arm 36. Thereby, the pawl 22 is pivoted radially outwards and loses its engagement with the driven element 18.

As the pawl 22 does not receive an exceedingly high kinetic energy, the motion of the pawl 22 is stopped by a spring element 74 in the disengaged position that act as a pawl end stop that keeps the pawl 22 from swiveling farther outwards than the disengaged position due to vehicle motions or during the normal disengagement of the clutch 10. The spring element 74 is attached to the face of the driving element 14 in the vicinity of the free end 26 of the pawl 22 and of the second clutch disk arm 46, and extends essentially parallel to the face of the driving element 14. The spring element 74 is flexible and can be deflected radially outwardly by the free end 26 of the pawl 22, whereby a pretensioning force is generated acting radially inwards on the free end 26.

In the disengaged position, the protrusion 72 on the first clutch disk arm 36 lies directly radially below the protrusion 72 on the pawl 22. This results in the pawl 22 being locked against involuntary movement radially inwards and therefore into the engaged position. These kinds of movements may occur during a crash situation when the reversible drive 12 is inactive and the clutch 10 is not supposed to be engaged. However, due to the interaction of the protrusions 70, 72 the clutch 10 is secured against unintentional engagement.

To reengage the clutch 10, the reversible drive 12 again turns the driving element 14 in driving direction D and the pawl 22 will be once again pivoted inwards into engagement with the driven element 18 as described above.

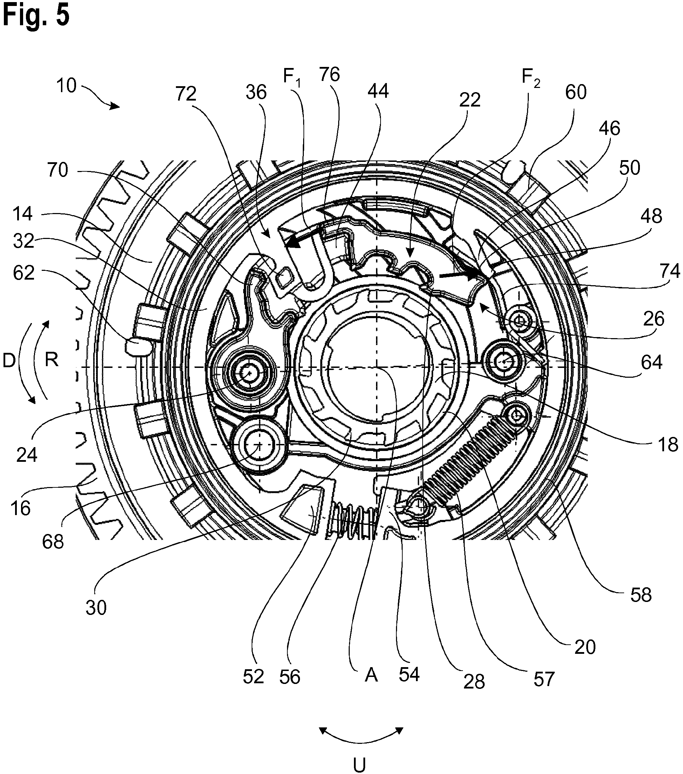

However, should the pyrotechnic drive be activated while the pawl 22 is in its engaged position, the clutch 10 will be decoupled so as not to impede the pyrotechnic drive and a subsequent load limiting function of the seatbelt system (see Figures 3 to 6).

When the pyrotechnical drive is activated, the driven element 18 starts rotating in driving direction D with a far higher rotational velocity than when driven by the reversible drive 12.

As a result, the teeth 30 of the driven element 18 act on the teeth 28 of the pawl 22 and transmit a high kinetic energy to the pawl 22. The pawl 22 is accelerated radially outwards into its decoupled position, where it is locked to the clutch disk ring 32. In the decoupled position, the pawl 22 is unable to engage the driven element 18 again, even if the reversible drive 12 rotates the driving element in driving direction D.

The transfer of the pawl 22 from the engaged position into the decoupled position is now described.

On the right-hand side of the flexible section 40 of the first clutch disk arm 36 a runway is formed that extends up to the free end 42 of the flexible section 40.

The right-hand side face of the recess 44 has a tangential protrusion 76 directed towards the flexible section 40 of the first clutch disk arm 36 and extending at the radial outer end of the recess 44 in circumferential direction U.

As the pawl 22 is accelerated radially outwards by the driven element 18, the tangential protrusion 76 slides radially outwards along the runway all the way to the free end 42 of the flexible section 40. The pawl 22 has attained so high a kinetic energy that the flexible section 40 is deflected in circumferential direction U towards the rigid section 38 by the tangential protrusion 76 during the outward motion of the pawl 22.

The tangential protrusion 76 then moves radially outwards beyond the free end 42 of the flexible section 40. The deflected free end 42 snaps back into its normal position due to its elasticity, when the tangential protrusion 76 has passed. The free end 42 of the flexible section 40 of the first clutch disk arm 36 is now positioned radially inwards of the tangential protrusion 76 of the pawl 22. Therefore, the pawl 22 is hindered from pivoting radially inwards again.

The free end 42 of the clutch disk arm 36 and the tangential protrusion 76 on the pawl 22 together from a latching connection that is closed when the free end 42 snaps below the tangential projection 76.

The latching connection is situated roughly in the middle of the pawl 22 with regard to the extension of the pawl 22 from the pawl pivot axis 24 to the free end 26 of the pawl 22.

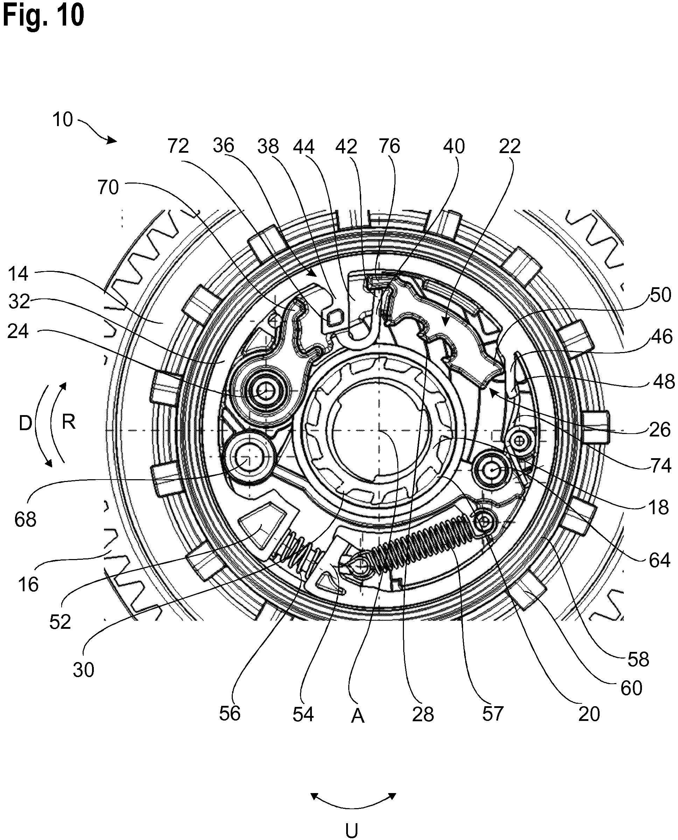

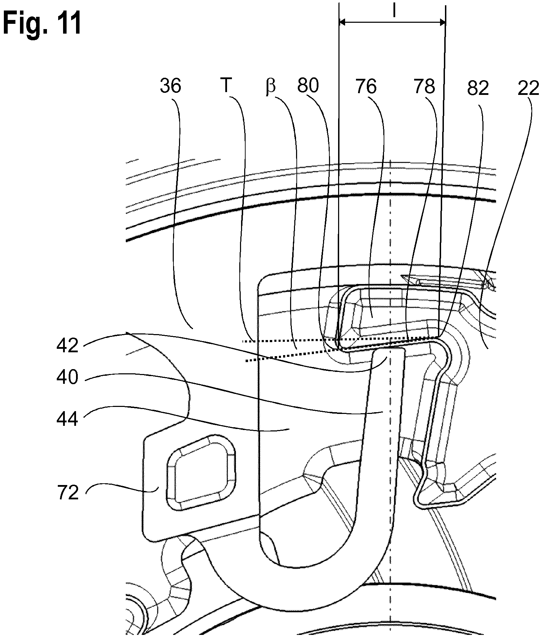

In the embodiment shown in Figs. 10 and 11, in the decoupled position a radial inner face 78 of the tangential protrusion 76 is inclined with regard to the tangential direction T in a negative angle β, so that a free end 80 of the radial inner face 78 lies further radially outwards than an inner end 82 of the radial inner face 78. The length I of the radial inner face 78 is defined by the distance between the ends 80, 82. The angle β lies here between about 0,5° and 15° and in particular between 3° and 8°.

In case that the pawl 22 reaches the decoupled position with an excessive kinetic energy and rebounces radially inwards, the pawl 22 exerts a radially inwardly directed force on the free end 42 of the flexible section 40 of the first clutch disk arm 36. Due to its inclination with regard to the tangential direction T, the radial inner face 78 of the tangential protrusion 76 guides the free end 42 away from the recess 44 in the pawl 22 towards the end 82 where the radial inner face 78 continues into the non-recessed bulk of the pawl 22. Thereby, the latching connection is kept closed.

In the engaged position the flexible section 40 of the first clutch disk arm 36 is located immediately adjacent to the tangential projection 76 of the pawl 22, as the flexible section 40 has been used to push the pawl 22 into the engaged position. When the pawl 22 pivots outwards from the engaged position, the tangential protrusion 76 slides along the runway on the flexible section 40 radially outwards.

During this motion, the pawl 22 also pushes the first clutch disk arm 36 in the circumferential direction U with a force F₁ so that the clutch disk ring 32 rotates in driving direction D.

However, as the pawl 22 moves into the decoupled position, its free end 26 also comes into contact with the second clutch disk arm 46 with the nose 50. This contact is made shortly before the free end 42 of the flexible section 40 of the first clutch disk arm 36 snaps below the tangential protrusion 76 on the pawl 22.

The pawl 22 exerts a force F₂ on the second clutch disk arm 46 that is opposite in direction to the force F₁. Therefore, the rotation of the clutch disk ring 32 in driving direction D is slowed or even stopped completely.

In the decoupled position, the second clutch disk arm 46 lies against the nose 50 on the free end 26 of the pawl 22 with a pretension. The pawl 22 is held between the free end 42 of the first clutch disk arm 36 and the second clutch disk arm 46.

In this embodiment, the free end 26 of the pawl 22 also contacts the spring element 74 and deflects the spring element 74 radially outwards. For instance, the spring element 74 has a contact section at which the pawl 22 is clampingly arrested in the decoupled position. In the decoupled position the contact section of the spring element 74 may be outwardly deflected by the pawl 22 so that it assumes a position further radially outwards than in the disengaged position. Therefore, the free end 26 of the pawl 22 does not come into contact with the contact section in the disengaged position.

The pawl 22 may be held on the spring element 74 and optionally on the second clutch disk arm 46 by frictional forces only. In particular, the pointed nose 50 on the free end 26 of the pawl 22 acts as a contact point to generate a high clamping pressure.

Under certain conditions during the engagement procedure, as the pawl 22 moves from the disengaged position to the engaged position, a situation can occur where the teeth 28 of the pawl 22 meet with the tips of the teeth 30 of the driven element 18, instead of correctly meshing with the teeth 30. In this case, only the tip of one of the teeth 28 of the pawl 22 hooks behind the tip of a tooth 30 of the driven element 18. However, as force is transmitted from the reversible drive 12 to the pawl 22, the pawl 22 and the driven element 18 initially stay in engagement, and the driven element 18 is rotated in driving direction D. This situation is also called a "tip-to-tip situation".

When a certain load limit is surpassed, however, the pawl 22 slips from the teeth 30 of the driven element 18 and is deflected by the driven element 18 into the decoupled position, as described above.

In this case, the reversible drive 12 can be stopped and rotated in release direction R to return the clutch 10 from the decoupled position into the disengaged position. From the disengaged position the clutch 10 can be re-engaged, as will be described below.

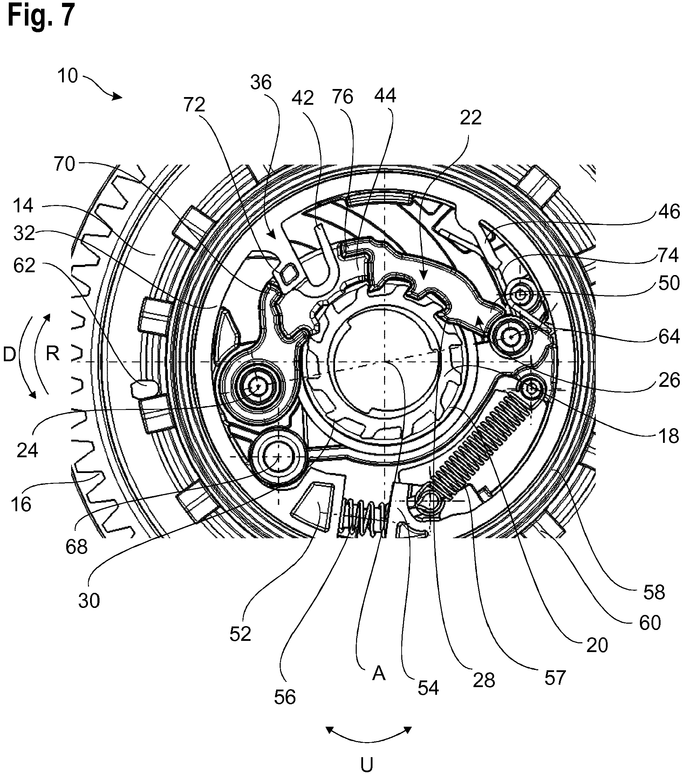

Fig. 7 shows a situation that may arise if an occupant wearing the seatbelt moves forcefully forward when the clutch10 is closed, but before the pyrotechnic drive is activated.

The seat belt spool than rotates in releasing direction R to pay out seat belt webbing. As the seat belt spool is fixedly coupled with the driven element 18 it will entrain the pawl 22 in releasing direction R. The driving element 14 therefore rotates in releasing direction R. As in the engaged position the protrusions 70, 72 lie at the same radial position, the protrusion 70 on the pawl 22 comes into contact with the protrusion 72 on the first clutch disk arm 36 and pushes the clutch disk ring 32 along in releasing direction R. Due to the friction coupling between the clutch disk ring 32 and the retainer ring 58, the retainer ring 58 is entrained with the clutch disk ring 32 until the spokes 60 come into contact with the retaining structure 62. Then, the retainer ring 58 is again stopped by the retaining structure 62 and the clutch disk ring 32 rotates inside the retainer ring 58, as the force transmitted by the pawl 22 is higher than the frictional force between clutch disk ring 32 and retainer ring 58.

However, due to the initial relative movement between the driving element 14 and the clutch disk ring 32, the return spring 57 is tensioned and a force is acting that attempts to rotate the clutch disk ring 32 in driving direction D.

When in this situation the pyrotechnic drive is activated, the rotation of the driven element 18 in driving direction D will accelerate the pawl 22 radially outwards into the decoupled position, even though the pawl 22 is not in the ideal angular position (see Fig. 3 vs. Fig. 7). As Fig. 6a shows in an enlarged section of Fig. 6, the tangential projection 76 extends over an overlap distance I that allows the closing of the latching connection even when the pawl 22 and the clutch disk ring 32 are slightly displaced relative to each other.

However, when the pawl 22 loses contact with the driven element 18, the pretensioned return spring 57 attempts to rotate the clutch disk ring 32 and the retainer ring 58 back in driving direction D, which would also tend to move the free end 42 of the first clutch disk arm 36 away from the tangential protrusion 76.

In the decoupled position, though, the pawl 22 comes to lie against the second clutch disk arm 46, so that the clutch disk ring 32 is kept in its relative position to the pawl 22 (and, accordingly, to the driving element 14). Therefore, the latching connection between the first clutch disk arm 36 and the pawl 22 remains securely locked. The length of the second clutch disk arm 46 is chosen at least as long as the overlap distance I in this example. In this situation, the clutch disk ring 32 is held against the pretension of the return spring 57.

To return the clutch 10 from the decoupled position into the disengaged position, the driving element 14 is rotated in releasing direction R.

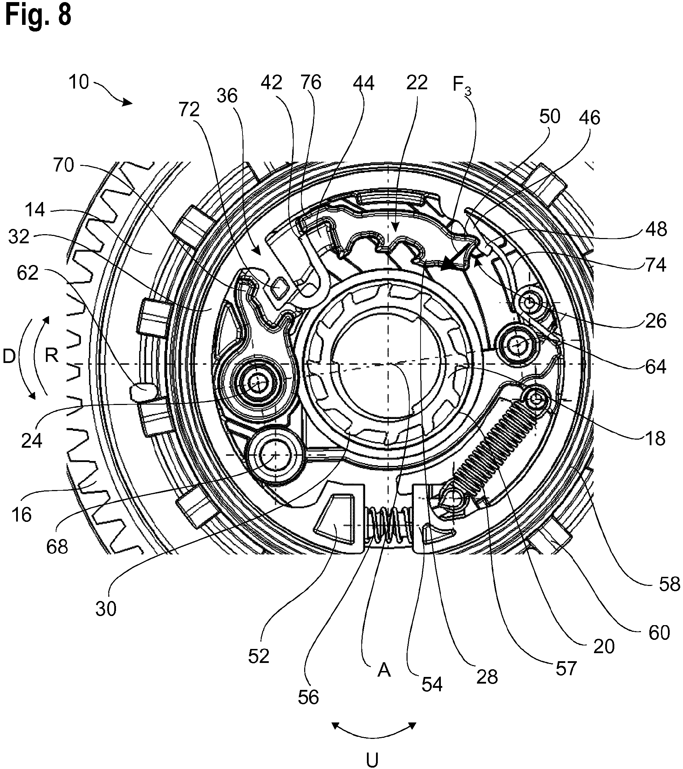

The sequence to reverse the pawl 22 from the decoupled position back into the disengaged position is shown in Figures 6, 8 and 1.

The reversible drive 12 is rotated in releasing direction R in one or several short pulses. The nose 50 on the free end 26 of the pawl 22 pushes against the spring element 74 and deflects it slightly radially outwards. Accordingly, the force that the spring element 74 exerts on the pawl 22 decreases and the pawl 22 slides along the spring element 74 until the nose 50 loses its clamping connection with the spring element 74. In this position of the pawl 22, the still slightly pretensioned spring element 74 pushes the free end 26 of the pawl 22 further inwards until the pawl 22 reaches its disengaged position.

This motion may be assisted by the contact of the free end 26 of the pawl 22 with the second clutch disk arm 46.

The spring element 74 may be arranged so that it can move radially beyond the second clutch disk arm 46, e.g. by lying in a plane above or below the second clutch disk arm 46. For instance, the spring element 74 may lie beneath the second clutch disk arm 46. The lower half of the pawl 22 (with regard to the axial direction) than interacts with the spring element 74 and the upper half of the pawl 22 interacts with the second clutch disk arm 46.

While the free end 26 of the pawl 22 slides along the spring element 74 and/or the second clutch disk arm 46, the tangential protrusion 76 on the pawl 22 that is part of the latching connection moves away from the flexible section 40 of the first clutch disk arm 36 in circumferential direction U so that the latching connection is released.

The pawl 22 is now held in the disengaged position by the protrusions 70, 72 on the pawl 22 and the first clutch disk arm 36 and the pawl end stop on the spring element 74 and/or on the second clutch disk arm 46, but is again free to pivot radially inwards when the reversible drive 12 rotates in driving direction D.

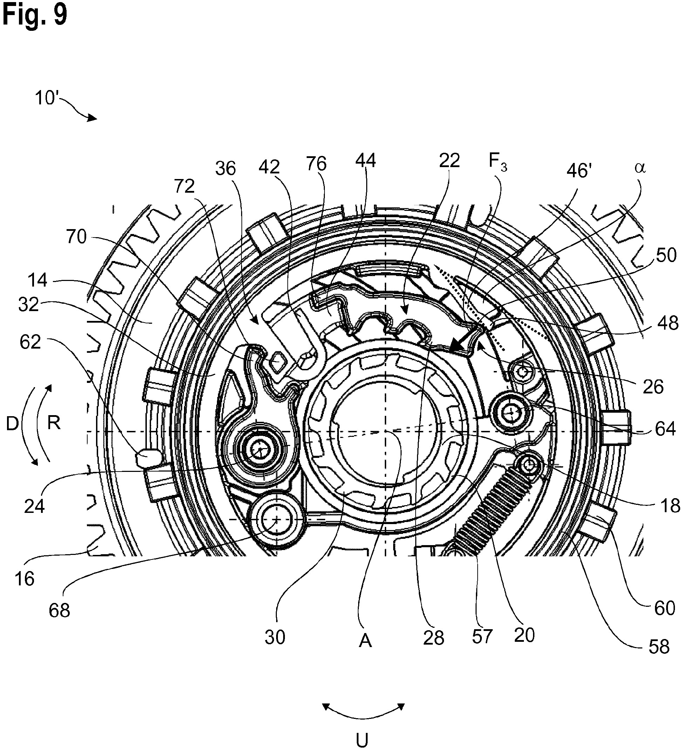

Figure 9 shows a second embodiment of the clutch 10'. In difference to the first embodiment the spring element 74 is omitted. Additional to stopping the rotation of the clutch disk ring 32 during the decoupling motion of the pawl 22 as described above, the second clutch disk arm 46' also assists in the clamping and releasing of the pawl 22 in the decoupled position and serves as the pawl end stop in the disengaged position.

To this effect, the second clutch disk arm 46' is slightly longer than the second clutch disk arm 46 according to the first embodiment so that its free end 48 is in contact with the nose 50 on the free end 26 of the pawl 22 in the decoupled position as well as in the disengaged position.

Acting as pawl end stop, the second clutch disk arm 46' is slightly deformed in the disengaged position (e.g. about 1° - 5°) so that constantly a pretensioning force acts on the pawl 22. Therefore, rattling noises due to small movements of the pawl 22 are avoided.

Also, in this embodiment, the radially inwardly directed force F₃ acting on the free end 26 of the pawl 22 to return the pawl 22 from the decoupled position back into the disengaged position is generated exclusively by the second clutch disk arm 46'.

When the reversible drive 12 is rotated in releasing direction R to move the pawl 22 back from the decoupled position into the disengaged position, the nose 50 on the free end 26 of the pawl 22 pushes against the second clutch disk arm 46'. The clutch disk ring 32 is retained by the retainer ring 58 so that it is kept back with regard to the pawl 22. The pawl 22 deforms the second clutch disk arm 46' so that it is slightly swiveled radially outwards and its angle α with the tangential direction decreases. Accordingly, the force F₃ that the second clutch disk arm 46' exerts on the pawl 22 decreases as well, and the pawl 22 slides along the second clutch disk arm 46' until the nose 50 loses its clamping connection with the second clutch disk arm 46. Than, the pawl 22 is pushed radially inwards into its disengaged position by the second clutch disk arm 46'.

## Claims

1. A clutch (10; 10') for a seat-belt tensioner in a vehicle, comprising
a driving element (14) adapted for being rotated in a driving direction (D) and in a releasing direction (R) and
a driven element (18) connectable with a seat-belt spool, the driving element (14) and the driven element (18) having a common rotation axis (A),
a pawl (22) being pivotally held at a pivot pin arranged on the driving element and forming a pivot axis (24),
the pawl (22) being adapted to assume a disengaged position in which the pawl (22) is not in engagement with the driven element and from which it can be pivoted radially inwards by turning the driving element (14) in driving direction (D), an engaged position in which the pawl (22) engages the driven element (18) and couples the driving element (14) with the driven element (18), and a decoupled position in which the pawl (22) is not in engagement with the driven element (18) and cannot be engaged with the driven element (18) by turning the driving element (14) in driving direction (D),
the clutch (10) further comprising a clutch disk ring (32) having an outer essentially circular circumference and a first clutch disk arm (36) extending inwards into an opening (34) enclosed by the clutch disk ring (32), the first clutch disk arm (36) interacting with the pawl (22) to guide the pawl (22) at least into and out of the engaged position, and
the clutch disk ring (32) having a second clutch disk arm (46; 46') extending inwards into the opening (34) enclosed by the clutch disk ring (32), the second clutch disk arm (46; 46') being flexible in radial direction (r) and being spaced from the first clutch disk arm (36) in circumferential direction (U) in a way that the pawl (22) comes into contact with both clutch disk arms (36, 46; 36, 46') when moving into the decoupled position.

2. Clutch according to claim 1, **characterized in that** the clutch (10) is configured so that, when the pawl (22) is moving into the decoupled position, the pawl (22) generates a force (F₂) acting on the second clutch disk arm (46; 46') that is essentially directed opposite with regard to the circumferential direction (U) to a force (F₁) generated by the pawl (22) acting on the first clutch disk arm (36).

3. Clutch according to any of the preceding claims, **characterized in that** in the decoupled position the pawl (22) is in contact with the first and the second clutch disk arm (36, 46; 36, 46').

4. Clutch according to claim 3, **characterized in that** in the decoupled position the pawl (22) is arrested by a latching connection between the first clutch disk arm (36) and the pawl (22).

5. Clutch according to any of the preceding claims, **characterized in that** the first clutch disk arm (36) is hook-shaped and has a flexible section (40) extending essentially radially outwards and ending in a free end (42).

6. Clutch according to claim 5, **characterized in that** the pawl (22) has a tangential protrusion (76) and that in the decoupled position the tangential protrusion (76) and the free end (42) of the flexible section (40) form a latching connection in which the tangential protrusion (76) lies radially outwards of the free end (42), in the decoupled position a radial inner face (78) of the tangential protrusion being inclined with regard to the tangential direction (T) so that a free end (80) of the radial inner face (78) is positioned further radially outwards than an inner end (82) of the radial inner face (78).

7. Clutch according to claim 6, **characterized in that** the radial inner face (78) is inclined by an angle (β) between about 0,5° and 15°, in particular between 3° and 10°.

8. Clutch according to any of the preceding claims, **characterized in that** the second clutch disk arm (46; 46') extends obliquely from the clutch disk ring (32) into the opening (34) enclosed by the clutch disk ring (32) and is inclined away from the pivot axis (24) of the pawl (22).

9. Clutch according to any of the preceding claims, **characterized in that** the second clutch disk arm (46; 46') is configured so that it is deformable radially outwards.

10. Clutch according to any of the preceding claims, **characterized in that** the second clutch disk arm (46; 46') comprises a flexible web with a free end (48) that extends into the opening (34) enclosed by the clutch disk ring (32).

11. Clutch according to any of the preceding claims, **characterized in that** the clutch (10) is configured so that in the decoupled position, in a situation where a return spring (57) acting between the driving element (14) and the clutch disk ring (32) pretensions the clutch disk ring (32) for a rotation in driving direction (D), the second clutch disk arm (46; 46') is in contact with the pawl (22) and prevents a relative motion between clutch disk ring (32) and the driving element (14).

12. Clutch according to any of the preceding claims, **characterized in that** the second clutch disk arm (46; 46') is arranged so that, in the decoupled position, it exerts a force (F₃) on a free end (26) of the pawl (22) that is directed radially inwards when the driving element (14) is rotated in releasing direction (R).

13. Clutch according to any of the preceding claims, **characterized in that** the second clutch disk arm (46') serves as a pawl end stop in the disengaged position, the free end (26) of the pawl (22) resting against the second clutch disk arm (46') and exerting a radially outwardly directed force on the second clutch disk arm (46').

14. Clutch according to any of the preceding claims, **characterized in that** a retainer ring (58) is provided surrounding the outer circumference of the clutch disk ring (32) and being coupled by friction with the clutch disk ring (32), the retainer ring (58) being configured for a limited rotation relative to a retaining structure (62) arranged immovable on a clutch housing.

15. Clutch according to any of the preceding claims, **characterized in that** a spring element (74) is provided that is fixedly arranged at the driving element (14) and that has a flexible portion that is elastically deflectable radially outwards, the flexible portion of the spring element (74) lying in the vicinity of the free end (26) of the pawl (22) when the pawl (22) is in its decoupled position.
